# EUROPÄISCHE PATENTANMELDUNG

(11) **EP 2 279 956 A2**
(43) Veröffentlichungstag der Anmeldung: **02.02.2011**
(21) Anmeldenummer: 10007770.0
(22) Anmeldetag: 27.07.2010
(51) Int. Cl.: B65D 1/26, B65D 1/28

(54) **Ein durch Spritzgießen hergestllter, dünnwandiger, mehrschichtiger Verpackungsbehälter aus Kunststoff mit einer Barriereschicht und Verfahren zu dessen Herstellung**

(30) Priorität: 28.07.2009 DE 102009035058
(71) Anmelder: Gizeh Verpackungen GmbH & Co.KG, 51702 Bergneustadt (DE)
(72) Erfinder: Jung, Ralf, 51702 Bergneustadt (DE)
(74) Vertreter: Schumacher, Horst

(57) **Zusammenfassung**

Die Erfindung betritt ein durch Spritzgießen hergestellter, dünnwandiger, mehrschichtiger Verpackungsbehälter aus Kunststoff mit einer Barriereschicht, unter anderem für Lebensmittel und Tiernahrung, bestehend aus einer Außenschicht und einer Innenschicht aus unterschiedlichen Materialien, bei dem die Innenschicht in die Außenschicht eingebettet ist, und die Innenschicht eine in sich geschlossene Schicht ist, die aus einem Stoff mit einer höheren Barriereeigenschaft als die Außenschicht besteht sowie der Verpackungsbehälter aus einem einzigen Guss besteht, wodurch die endgültige Form und die Schichtbildung der Wand des Verpackungsbehälters in einem einzigen Spritzguss-Prozessschritt unmittelbar herstellbar sind.

## Beschreibung

### GEBIET DER ERFINDUNG

Die vorliegende Erfindung betrifft einen dünnwandigen spritzgegossenen mehrschichtigen Verpackungsbehälter mit einer Barriereschicht nach dem Oberbegriff von Anspruch 1 und ein Verfahren zum Herstellen eines solchen Verpackungsbehälters mit den Merkmalen des Oberbegriffs des Anspruchs 9.

Die Barriereschicht verhindert, dass unerwünschte Einflüsse, wie zum Beispiel Licht-, Sauerstoff- und/oder Wasserdampf, mit dem Füllgut in Kontakt kommen. Insbesondere beim Verpacken und Lagern von Lebensmitteln und Tiernahrung besteht die Anforderung, dass die Qualität des abgefüllten Produktes so lange wie möglich unverändert bleibt. So kann zum Beispiel der Kontakt mit Wasserdampf oder Sauerstoff das Füllgut schneller verderben lassen.

Es ist daher ein wichtiges Ziel in der Verpackungsindustrie die Barriereeigenschaften von Verpackungsbehältern zu verbessern und die Verpackungsbehälter auf einfache Weise kostengünstig herzustellen.

### TECHNOLOGISCHER HINTERGRUND

Mehrschichtige Verpackungsbehälter mit einer Barriereschicht und Verfahren zu deren Herstellung sind in vielfältiger Form bekannt. So werden zum Beispiel mehrschichtige Verpackungsbehälter durch mehrschichtiges Spritzgießen, Laminieren, Tiefziehen, In-Mold-Labeling (IML), Spritz-Reck-Blas-Verfahren, usw. hergestellt.

Derzeit besteht bei mehrschichtigen Verpackungsbehältern das Problem, dass eine mehr oder minder lückenlose Barriereschicht nicht in einem einstufigen Produktionsverfahren erzielt werden kann. Vielmehr wird die Barriereschicht z.B. nach dem Spritzgießen eines Anspritzlings durch Auflaminieren oder nach einer Vorbehandlung durch Anspritzen aufgetragen. Dies hat jedoch den Nachteil, dass die Barriereschicht entweder auf der Außenseite der Verpackung liegt, wodurch sie einfach beschädigt werden kann, oder dass sie mit dem Füllgut in Berührung kommt, was unter Umständen das Füllgut negativ beeinflusst. Die mehrstufige Herstellung mehrschichtiger Verpackungsbehälter ist entsprechend kostenintensiv.

In der DE 10308742 A1 wird die Herstellung eines mehrschichtigen, mehrkomponentigen Kunststoffformteils durch Mehrschichtspritzen beschrieben. Dabei wird zuerst ein Vorspritzling durch Spritzgießen aus einer thermoplastischen Komponente hergestellt. Anschließend wird der Vorspritzling mit einem Plasmagasstrom beaufschlagt, und danach mit einem vernetzenden Elastomer angespritzt. Dadurch soll eine gute und dauerhafte Verbindung zwischen den beiden Kunststofftypen erzielt werden.

Eine andere Möglichkeit wird in DE 69130026 T2 beschrieben: Ein Behälter aus einer Polyolefinzusammensetzung enthält einen metallischen Katalysator. Der Katalysator fördert die Oxidation der Polyolefine mit Sauerstoff, dadurch wird die Sauerstoffdurchlässigkeit des Behälters herabgesetzt. Damit das Lebensmittel mit dem metallischen Katalysator nicht in Berührung kommt, und um dem Behälter mehr Stabilität zu verleihen, wird die Außen- und Innenseite mit einem Harz überlaminiert.

Die DE 102005045621 A1 beschreibt einen Verpackungsbehälter mit hoher Gasdichtigkeit und ein Verfahren zu seiner Herstellung. Der Verpackungsbehälter wird durch Spritzgießen hergestellt. Eine Folie, die in das Formwerkzeug eingelegt wird und die eine hohe Gasdichtigkeit besitzt, wird gemäß dem In-Mold-Labeling Verfahren hinterspritzt. Der durch dieses Verfahren hergestellte Verpackungsbehälter erreicht im Bereich der eingebetteten Folie eine hohe Gasdichtigkeit.

In der DE 102004054938 wird ein Blasformungs-Verfahren beschrieben gemäß dem in einen blasgeformten Kunststoffhohlkörper mindestens eine Schichtbildnersubstanz eingebracht wird. Dies geschieht mit Hilfe eines Brenngases, welches die mindestens eine Schichtbildnersubstanz enthält. Bei Zünden des Brenngases wird eine Diffusionsbarriereschicht ausgebildet. Um eine gleichmäßige Verteilung der Barriereschicht zu erreichen, wird eine Zündvorrichtung verwendet, die raumverteilt mehrere Zündpunkte bildet.

Eine andere Möglichkeit beschreibt die DE 102005018245 A1. Darin wird ein Verfahren beschrieben gemäß dem ein dickwandiger Vorformling für das Blasformen durch Koinjektion hergestellt wird. Die Barriereschicht, welche zwischen der Außen- und Innenseite eines dickwandigen Vorformlings angeordnet ist, besteht dabei aus einem Gemisch aus dem Kunststoffmaterial der Außen- und/oder Innenseite und aus einem Barrierematerial. Der Vorformling wird in einem zweiten Prozessschritt durch Blasen in den Hohlkörper mit der gewünschten Form überführt.

### DARSTELLUNG DER ERFINDUNG

Von dem oben genannten Stand der Technik ausgehend, löst die Erfindung das Problem, einen dünnwandigen spritzgegossenen mehrschichtigen Verpackungsbehälter und ein Verfahren zu dessen Herstellung zur Verfügung zu stellen, die gegenüber dem Stand der Technik vereinfacht und kostengünstiger sind.

Hierzu sieht die Erfindung einen spritzgegossenen mehrschichtigen Verpackungsbehälter mit den Merkmalen des Anspruchs 1 und ein Herstellungsverfahren mit den Merkmalen des Anspruchs 9 vor. Demgemäß besteht die Behälter-Wandung aus mindestens drei Schichten. Dabei wird eine in sich geschlossene Innenschicht von der Außenschicht vollständig umschlossen. Die Außenschicht befindet sich dabei auf beiden Seiten der Innenschicht und besteht in ihren beiden Teilbereichen aus demselben thermoplastischen Kunststoff. Die zwischen diesen Teilbereichen liegende Innenschicht besteht aus einem Stoff mit einer höheren Barriereeigenschaft als die Außenschicht.

Der mehrschichtige Verpackungsbehälter kann im Koinjektionsverfahren hergestellt werden. Das Barriereschichtmaterial wird in die so genannte heiße Seele zwischen das thermoplastische Kunststoffmaterial der Außenschicht eingespritzt. Es tritt somit in der Regel an keiner Stelle durch die Außenschicht hindurch.

Als Kunststoffmaterial ist prinzipiell jedes thermoplastische Material verwendbar. Jedoch werden bevorzugt Polypropylen (PP), Polyethylen (PE), Polystyrol (PS), Polyethylenterephthalat (PET), Polycarbonat (PC), Polyvinylchlorid (PVC) oder Mischungen der genannten Kunststoffmaterialien verwendet.

Die Barriereschicht dient - wie eingangs erwähnt - dazu, bestimmte Stoffe oder andere schädliche Einflüsse, die durch die Außenschicht dringen können, von dem Füllgut oder von der Umgebungsatmosphäre fernzuhalten. So sorgt die Barriereschicht zum Beispiel dafür, dass Licht, insbesondere UV-Strahlung, nicht an das Füllgut gelangen kann, wenn das Füllgut lichtsensitiv ist. Es ist auch möglich, dass die Barriereschicht Wasserdampfdurchtritt verhindert oder zumindest reduziert, um das Füllgut vor Austrocknung und Gewichtsverlust, oder vor Feuchtigkeitsaufnahme, wenn es sich um ein trockenes Füllgut handelt, zu schützen. Besonders wichtig ist in vielen Fällen, der Schutz vor Sauerstoffzutritt, da der Sauerstoff mit dem Füllgut reagieren kann. Dadurch wird das Füllgut oxidiert und kann sich möglicherweise verfärben oder schlimmstenfalls schneller verderben. Es ist auch möglich das Füllgut vor mehreren dieser oder vor anderen verschiedenen Einflüssen zu schützen. Dazu können mehrere und/oder Multifunktions-Barriereschichten zwischen die Außenschicht eingebracht werden. Als Barriereschichtmaterial ist prinzipiell jedes Material verwendbar, welches das Füllgut oder die Umgebungsatmosphäre vor schädlichen Einflüssen schützt, und/oder jeder Stoff mit einer höheren Barriereeigenschaft als die der Außenschicht. Für die Erfindung werden bevorzugt Ethylvinylalkohol (EVOH), Polyamid (PA), Polyethylenterephthalat (PET), Thermoplastische Elastomere (TPE) oder Mischungen der genannten Materialien verwendet.

Die Dünnwandigkeit eines Verpackungsbehälters im Sinne der vorliegenden Erfindung wird über das Wandstärken/Fließweg-Verhältnis (WFV) definiert. Dabei gelten Produkte als dünnwandig, die ein WFV kleiner als 1:100 besitzen. Die vorliegende Erfindung bevorzugt dabei ein WFV von kleiner als 1:150.

Bei Verpackungsbehältern gemäß der vorliegenden Erfindung beträgt die Schichtstärke der Innenschicht bevorzugt zwischen 0,02 und 0,3 mm. Dabei macht die Innenschicht 5 bis 30%, bevorzugt 12 bis 18%, der Verpackungsmaterialstärke aus.

Die Lage der Innenschicht im Bezug auf die Dicke der Behälterwand ist grundsätzlich frei wählbar. Sie ist insbesondere asymmetrisch.

Insbesondere kann die Innenschicht an der Behälteraußenseite mit einer Schichtstärke der Außenschicht von 2 bis 50% der Verpackungsmaterialstärke oder Wandungsdicke bedeckt sein, wenn der Angusspunkt der Spritzgießform im Behälterinneren liegt. Umgekehrt kann die Innenschicht an der Behälterinnenseite mit einer Schichtstärke der Außenschicht von 2 bis 50% der Verpackungsmaterialstärke oder Wandungsdicke bedeckt sein, wenn der Angusspunkt der Spritzgussform an der Behälteraußenseite liegt.

Die Verarbeitungstemperaturen am Angusspunkt betragen je nach verwendetem Material zwischen 150 und 300°C.

Wie üblich beim Kunststoffspritzguss wird die Form, die zumindest aus einem Kern und einer Matrize besteht, gekühlt, um die Erhärtung des Kunststoffes zu beschleunigen. Die Erfindung bevorzugt eine asymmetrische Kühlung. 50 bis 90% vorzugsweise etwa 80% der Kühlung finden auf der einen und 10 bis 50% vorzugsweise etwa 20% der Kühlungen finden auf der anderen Verpackungsbehälterseite statt. Die Kernkühlung ist vorzugsweise stärker als die Matrizenkühlung.

Einer der Vorteile der Erfindung ist es, dass durch die Verknüpfung eines einstufigen Formgebungsprozesses durch Spritzgießen und dem gleichzeitigen Einfügen einer Barriereschicht ein kostengünstiges Produkt entsteht, welches im Gegensatz, etwa zum Tiefziehverfahren oder zu Alumniumverpackungen, den Vorteil besitzt, dass u.a. eine definierte und optimierte Wandstärke, ein hohes Maß an Reproduzierbarkeit und hohe Formgebungsfreiheit erreicht werden. Gleichzeitig wird der Zusatznutzen einer integrierten Barriereschicht unmittelbar erreicht, ohne dass die Wandstärke des Verpackungsbehälters in einem unabhängigen und zudem weniger präzise ausführbaren Verfahrensschritt, wie dem Streckblasen, auf das Sollmaß reduziert werden muss.

Je nach verwendetem Barrierematerial kann es hilfreich sein, wenn ein Haft- oder Trennmittel eingesetzt wird. Dieses kann dem Material der Innen- und/oder vorzugsweise der Außenschicht als Bestandteil beigemischt sein. Ein Trennmittel wird dann benötigt, wenn die Gefahr eines ggf. unerwünschten Vermischens zwischen der Außen- und Innenschicht besteht. Ein Haftmittel kann verwendet werden, um eine bessere Haftung zwischen Außen- und Innenschicht zu erreichen, damit wird das Delaminierungsrisiko vermindert.

### AUSFÜHRUNGSBEISPIEL

Beim Herstellen eines Verpackungsbehälters wird die Schmelze der Innenschicht in die sich in der Spritzgießform ausbildenden plastischen Seele der Außenschicht eingespritzt. Hierzu stehen Mehrkammer-Einspritzdüsen mit sogenannten Nadelverschlüssen zur Verfügung, wie u.a. in der WO99/22926 beschrieben. Bevorzugt wird die Innenschicht über einen von einer radial inneren Nadel steuerbaren Querschicht und von der Außenschicht beide Teilschichten oder -bereiche über einen von einer radial äußeren Nadel steuerbaren Querschnitt eingespritzt. Durch das Spritzgießen ohne Weiterverformung besteht der Verpackungsbehälter aus einem Guss und die Innenschicht ist in der Außenschicht eingebettet. Die Schmelzen der Außen- und Innenschicht werden erst im Bereich der Nadelverschlüsse zusammengefügt. Um eine Vermischung der Schmelzen vor den Nadelverschlüssen zu verhindern, werden die beiden Schmelzen durch getrennte Kanäle bis nahe an den oder direkt an den Angusspunkt des Verpackungsbehälters heran geführt. Die Verarbeitungstemperatur beträgt am Angusspunkt je nach verwendetem Material zwischen 150° und 300°C. Das Nadelführungssystem verfügt über 4 Betriebsstellungen. Die Einspritzzeit beträgt in der Regel zwischen 0,1 und 1 Sekunde. Jedoch wird eine Einspritzzeit zwischen 0,2 und 0,8 Sekunden bevorzugt. Während und/oder nach erfolgter Formfüllung wird die Spritzgießform im Kavitätsbereich mit Hilfe einer Wasserkühlung auf Temperaturen deutlich unterhalb der Erstarrungstemperaturen des verwendeten Materials der Außenschicht abgekühlt, wobei die Kernkühlung etwa 80% und die Matrizenkühlung etwa 20% der Kühlleistung beträgt.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können Weitere Einzelheiten, Merkmale und Vorteile des Gegenstandes der Erfindung ergeben sich aus den Unteransprüchen, sowie aus der nachfolgenden Beschreibung der zugehörigen Zeichnungen, in der - beispielhaft - ein Ausführungsbeispiel eines Verpackungsbehälters dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen
Figur 1A einen Verpackungsbehälter in Vertikalschnittansicht (Schnitt A-A gemäß Fig. 1 B);
Figur 1B denselben Verpackungsbehälter in Draufsicht;
Figur 1C von demselben Verpackungsbehälter eine Detailansicht des Angusspunktes nach Fig. 1A;
Figur 1D von demselben Verpackungsbehälter eine weitere Vertikalschnittansicht (Schnitt entlang der Linie B-B gemäß Fig. 1 B) stark vergrößert sowie
Figuren 2A bis 2D eine Herstellungssequenz in Schnittdarstellung mit Koinjektionsdüsen und Spritzgießform als Prinzipdarstellung.

### DETAILLIERTE BESCHREIBUNG DER ZEICHNUNGEN

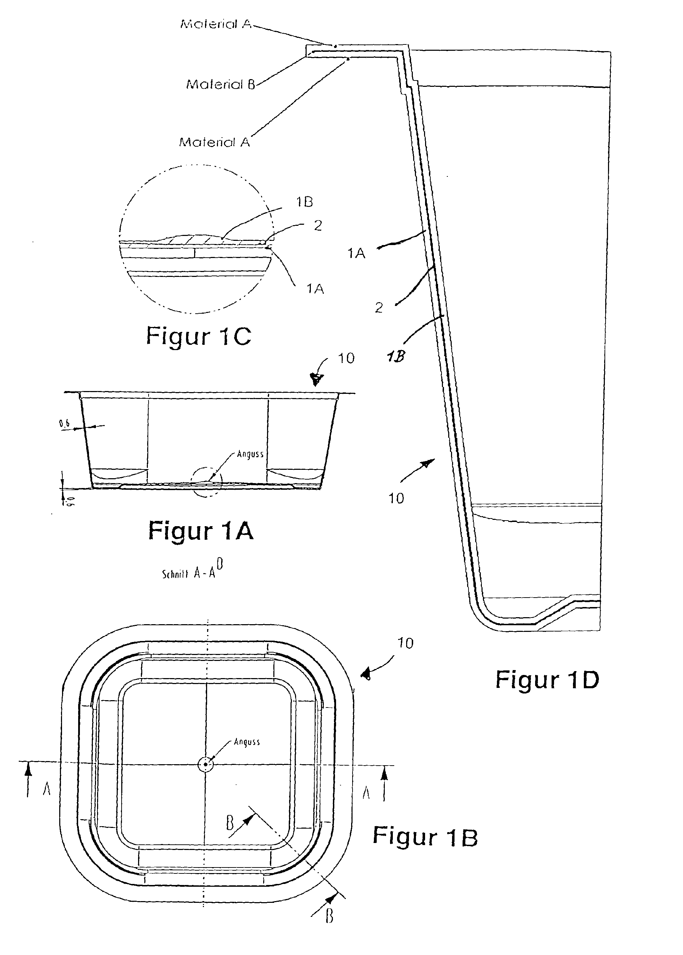

Figuren 1A bis 1D zeigen beispielhaft einen spritzgegossenen dünnwandigen mehrschichtigen Verpackungsbehälter 10. Eine Innenschicht 2 (Figuren 1C bis 1D) ist komplett von der Außenschicht 1 A,B umhüllt (Fig. 1D).

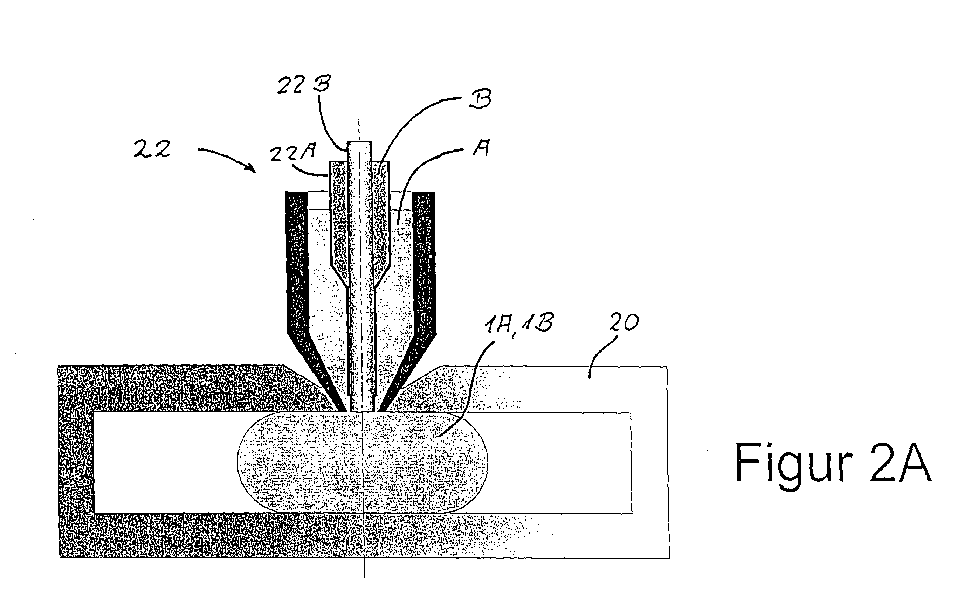

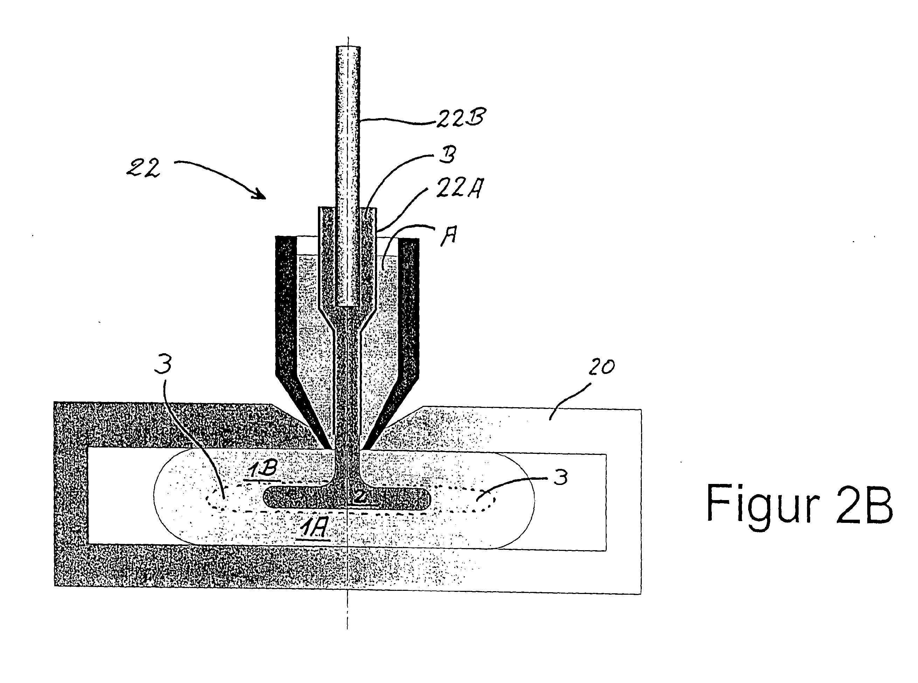

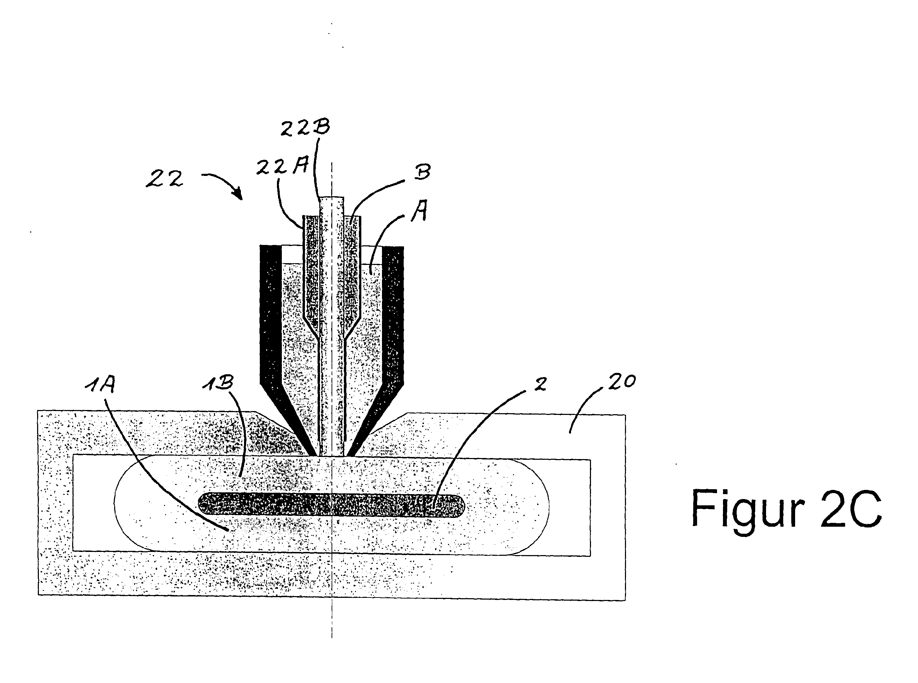

In den Figuren 2A bis 2D wird beispielhaft eine Koinjektionssequenz dargestellt, bei der nur zwei Materialien verwendet werden. Ein Fachmann kann die dargestellte Ausführungsform ohne weiteres auch auf drei oder mehr Materialien erweitern. In Figur 2A ist die erste Betriebsstellung des Nadelführungssystems 22 zur Herstellung eines Verpackungsbehälters 10 dargestellt. Es wird nur die Schmelze A der Außenschicht 1A, B in eine Spritzgießform 20 eingespritzt. Für die Schmelze B der Innenschicht 2 bleibt der Zugang in die Form 20 zunächst verwehrt. In Figur 2B ist die zweite Betriebsstellung des Nadelführungssystem 22 zur Herstellung des Verpackungsbehälters 10 dargestellt. In dieser Stellung fließen die Schmelze A der Außenschicht 1 A, B und die Schmelze B der Innenschicht beide in die Spritzgießform 20 ein. Dabei wird die Schmelze der Innschicht 2 in die plastische Seele 30 der Schmelze der Außenschicht 1 A, B geführt, wonach diese verdrängt wird. In Figur 2C ist die dritte Betriebsstellung des Nadelführungssystem zur Herstellung dargestellt. In dieser Stellung wird der Schmelze der Innenschicht 2 wieder der Zugang zur Spritzgießform 20 verwehrt. So dass nur die Schmelze der Außenschicht weiterhin in die Spritzgießform 20 einfließen kann.

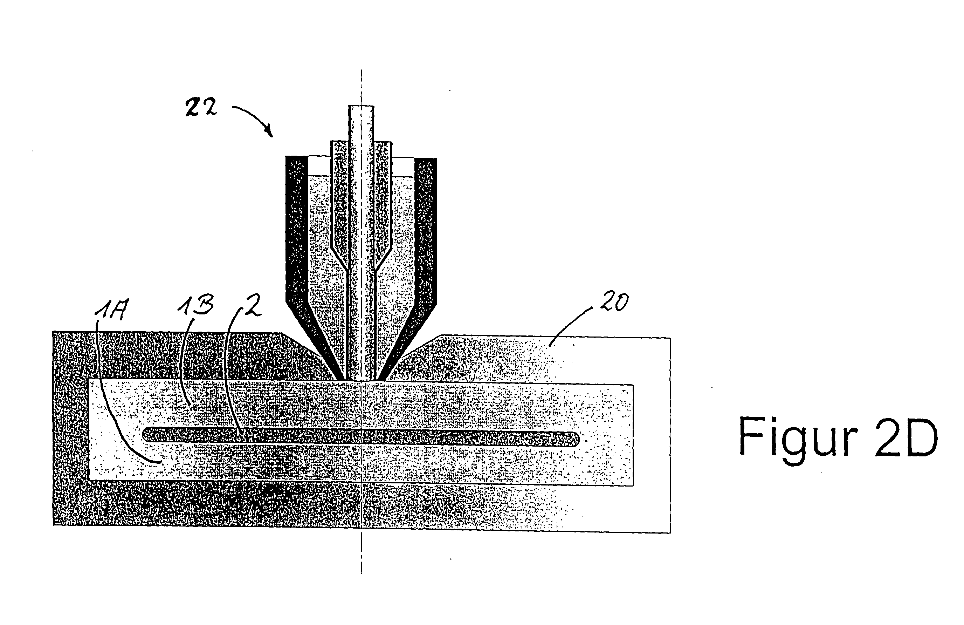

In Figur 2D ist die vierte Betriebsstellung des Nadelführungssystem dargestellt. In dieser Stellung wird sowohl der Schmelze der Außenschicht als auch der Schmelze der Innenschicht der Zugang zur Spritzgießform 20 verwehrt. In dieser Betriebsstellung ist der Spritzvorgang abgeschlossen. Dadurch dass die Schmelze der Innenschicht durch die Schmelze der Außenschicht geführt wird, ist erkennbar, dass nach kompletter Füllung der Spritzgießform 20 die Innenschicht 2 an keiner Stelle der Außenschicht 1 A, B des Verpackungsbehälters 10 austritt.

### Bezugszeichenliste

- 1 A, B: Außenschicht
- 2: Innenschicht
- 10: Verpackungsbehälter
- 20: Spritzgießform
- 22: Nadelführungssystem
- 30: plastische Seele

- A: erste Schmelze
- B: zweite Schmelze

## Patentansprüche

1. Ein durch Spritzgießen hergestellter, dünnwandiger, mehrschichtiger Verpackungsbehälter aus Kunststoff mit einer Barriereschicht, unter anderem für Lebensmittel und Tiernahrung, bestehend aus einer Außenschicht und einer Innenschicht aus unterschiedlichen Materialien, **dadurch gekennzeichnet,**
**dass** die Innenschicht in die Außenschicht eingebettet ist,
**dass** die Innenschicht eine in sich geschlossene Schicht ist, die aus einem Stoff mit einer höheren Barriereeigenschaft als die Außenschicht besteht und
**dass** der Verpackungsbehälter aus einem einzigen Guss besteht, wodurch die endgültige Form und die Schichtbildung der Wand des Verpackungsbehälters in einem einzigen Spritzguss-Prozessschritt unmittelbar herstellbar sind.

2. Ein dünnwandiger Verpackungsbehälter nach Anspruch 1, **dadurch gekennzeichnet, dass** das Wandstärke/Fließweg-Verhältnis kleiner 1:100, vorzugsweise kleiner als 1:150 ist.

3. Ein dünnwandiger Verpackungsbehälter nach Anspruch 1 oder 2, **dadurch gekennzeichnet, dass** die Außenschicht aus PP, PE, PS, PET; PC oder PVC bzw. aus einer Mischung der vorgenannten Kunststoffe besteht.

4. Ein dünnwandiger Verpackungsbehälter nach einer der Ansprüche 1 bis 3, **dadurch gekennzeichnet, dass** die Innenschicht aus EVOH, PA, PET oder TPE oder eine Mischung dieser Stoffe besteht.

5. Ein dünnwandiger Verpackungsbehälter nach einer der Ansprüche 1 bis 4, **dadurch gekennzeichnet, dass** die Schichtstärke der Innenschicht zwischen 0,02 und 0,3 mm beträgt.

6. Ein dünnwandiger Verpackungsbehälter nach einer der Ansprüche 1 bis 5, **dadurch gekennzeichnet, dass** die Innenschicht zwischen 5 bis 30%, vorzugsweise zwischen 12 bis 18%, der Verpackungsmaterialstärke beträgt.

7. Ein dünnwandiger Verpackungsbehälter nach einer der Ansprüche 1 bis 6, **dadurch gekennzeichnet, dass** die Innenschicht asymmetrisch zwischen Behälteraußen- und -innenseite angeordnet ist.

8. Ein dünnwandiger Verpackungsbehälter nach Anspruch 7, **dadurch gekennzeichnet, dass** die Innenschicht an der Behälteraußenseite mit einer Außenschicht einer Schichtstärke von 2 bis 50% der Verpackungsmaterialstärke überdeckt ist.

9. Ein dünnwandiger Verpackungsbehälter nach Anspruch 7 oder 8, **dadurch gekennzeichnet, dass** der Angusspunkt der dünneren Seite der Außenschicht gegenüberliegt.

10. Ein dünnwandiger Verpackungsbehälter nach einer der Ansprüche 1 bis 9, **dadurch gekennzeichnet, dass** die Innenschicht eine Barriereschicht ist, die vor Licht-, Sauerstoff- und/oder Wasserdampfzutritt schützt.

11. Verfahren zum Herstellen eines dünnwandigen, mehrschichtigen, mehrkomponentigen Verpackungsbehälters aus Kunststoff, durch Spritzgießen,
**dadurch gekennzeichnet,**
**dass** eine Schmelze für die Innenschicht in die sich in der Spritzgießform ausbildende plastische Seele der Schmelze der Außenschicht eingeführt wird, und
**dass** der Verpackungsbehälter aus einem einzigen Guss hergestellt wird, wodurch die endgültige Formgebung und die Schichtbildung des Verpackungsbehälters durch Spritzgießen in einem einzigen Produktionsschritt unmittelbar erfolgen.

12. Verfahren nach Anspruch 11, **dadurch gekennzeichnet, dass** die Verarbeitungstemperatur am Angusspunkt zwischen 150 und 300°C beträgt.

13. Verfahren nach Anspruch 11 oder 12, **dadurch gekennzeichnet, dass** die Einspritzzeit zwischen 0,1 und 1 Sekunde, vorzugsweise zwischen 0,2 und 0,8 Sekunden beträgt.

14. Verfahren nach einem der Ansprüche 11 bis 13 **dadurch gekennzeichnet, dass** die Spritzgießform im Kavitätsbereich während und/oder nach erfolgter Formfüllung auf Temperaturen deutlich unterhalb der Erstarrungstemperatur des verwendeten Materials der Außenschicht unsymmetrisch abgekühlt wird.
